# EUROPÄISCHE PATENTSCHRIFT

(11) **EP 2 412 600 B1**
(45) Veröffentlichungstag und Bekanntmachung des Hinweises auf die Patenterteilung: **05.09.2012**
(21) Anmeldenummer: 10007925.0
(22) Anmeldetag: 29.07.2010
(51) Int. Cl.: B61D 17/22, B60D 5/00, B62D 47/02

(54) **Dachgelenk für ein mehrgliedriges Fahrzeug**
Roof joint for an articulated vehicle
Articulation de toit pour un véhicule à plusieurs articulations

(43) Veröffentlichungstag der Anmeldung: 01.02.2012
(73) Patentinhaber: ATG Autotechnik GmbH, 22962 Siek (DE)
(72) Erfinder: Browne, Denis B., 22946 Trittau (DE)
(74) Vertreter: Glawe, Delfs, Moll

(56) Entgegenhaltungen:
- EP-A1- 0 648 663
- EP-A1- 1 038 761
- DE-U1-202006 004 643
- DE-U1-202006 007 377
- US-A- 1 695 633

## Beschreibung

Die Erfindung betrifft ein Dachgelenk für eine gelenkige Verbindung zwischen einem ersten Wagen und einem zweiten Wagen eines mehrgliedrigen Fahrzeugs.

Ein Dachgelenk mit dem im Oberbegriff von Anspruch 1 definierten Merkmalen ist aus der DE-U-20 2006 004 643 bekannt.

Ein mehrgliedriges Fahrzeug, bei dem das Dachgelenk zum Einsatz kommen kann, kann beispielsweise eine mehrere Wagen umfassende Straßenbahn sein. In Betracht kommen auch andere schienengebundene Fahrzeuge oder straßengebundene Fahrzeuge wie Gelenkbusse. Die Wagen des Fahrzeugs können so miteinander verbunden sein, dass ein Durchgang zwischen den Wagen besteht, den die Passagiere während der Fahrt nutzen können. Die Fahrzeuge sind über eine unterhalb des Durchgangs angeordnete Kupplung miteinander verbunden, die die Wagen in einem festen Abstand zueinander hält und einen zentralen Drehpunkt für die Relativbewegungen zwischen den Wagen bildet. Die Kupplung ist so ausgelegt, dass sie Relativbewegungen, wie Drehbewegungen, Nickbewegungen und Wankbewegungen, zwischen den Wagen frei zulässt.

Oberhalb des Durchgangs kann ein Dachgelenk vorgesehen sein, das dazu bestimmt ist, mit der unterhalb des Durchgangs liegenden Kupplung zusammenzuwirken. Wegen des Abstands zur Kupplung und damit zum zentralen Drehpunkt muss das Fahrzeuggelenk komplexe Bewegungen ausgleichen, die unter anderem Abstandsänderungen und Relativbewegungen in Querrichtung umfassen.

Ausgehend von diesem Stand der Technik liegt der Erfindung die Aufgabe zu Grunde, ein Dachgelenk vorzustellen, das eine definierte Führung für Relativbewegungen zwischen den Wagen bietet. Die Aufgabe wird gelöst durch die Merkmale des unabhängigen Anspruchs. Vorteilhafte Ausführungsformen finden sich in den Unteransprüchen.

Erfindungsgemäß umfasst das Fahrzeuggelenk einen sich zu dem ersten Wagen erstreckenden Hauptträger sowie zwei sich zu dem zweiten Wagen erstreckende Dämpfer. Für die Dämpfer ist eine Dämpferanlenkung an dem Hauptträger vorgesehen, mit der eine gemeinsame Drehachse definiert wird, um die sich die Dämpfer relativ zu dem Hauptträger drehen können.

Zunächst werden einige Begriffe erläutert. Ein Dachgelenk bezeichnet ein Fahrzeuggelenk, das in einem Abstand zu der den zentralen Drehpunkt bildenden Kupplung angeordnet ist. Regelmäßig ist die Kupplung unterhalb eines für die Passagiere bestimmten Durchgangs angeordnet und das Dachgelenk oberhalb des Durchgangs, also im Dachbereich des Fahrzeugs.

Als Drehbewegung wird die Bewegung bezeichnet, die zwischen zwei Wagen stattfindet, wenn das Fahrzeug in der Ebene um eine Kurve fährt. Eine Nickbewegung findet statt, wenn das Fahrzeug über eine Kuppe oder durch eine Senke fährt. Bei einer Wankbewegung verdrehen sich die Wagen relativ zueinander um eine horizontale Längsachse.

Über die Dämpferanlenkung sind die Dämpfer mit dem Hauptträger verbunden. In den meisten Fällen sind die Dämpfer direkt in der Drehachse am Hauptträger angelenkt und beispielsweise übereinander angeordnet. Nicht ausgeschlossen ist es aber, dass die Dämpferanlenkung ein Zwischenstück umfasst, das seinerseits drehbar gegenüber dem Hauptträger gelagert ist und an dem die Dämpfer angelenkt sind.

Mit dem Hauptträger wird eine Drehachse definiert, die relativ zu dem ersten Wagen eine feste Position hat. Die Erfindung hat erkannt, dass sich mit einer solchen Drehachse mehrere technische Funktionen elegant miteinander kombinieren lassen. Indem die Dämpfer sich gemeinsam um die Drehachse drehen können, kann eine zwischen den Wagen auftretende Drehbewegung aufgenommen werden, ohne dass dies eine Längenänderung der Dämpfer erfordert und ohne dass in dem Dachgelenk große Kräfte aufgenommen werden müssten. Eine Nickbewegung, die für das Dachgelenk gleichbedeutend mit einer Abstandsänderung der Wagen ist, kann das Dachgelenk aufnehmen, indem die Drehachse sich parallel zur Längsachse des Fahrzeugs an den zweiten Wagen annähert bzw. von diesem entfernt. Dies geht einher mit einer Längenänderung der Dämpfer. Für die Aufnahme von Wankbewegungen kann sich die Drehachse relativ zu dem zweiten Wagen nach links oder rechts zur Seite bewegen, wobei dies ebenfalls mit einer Längenänderung der Dämpfer verbunden ist. Auch Kombinationen aus Drehbewegungen, Nickbewegungen und Wankbewegungen können auf diese Weise vom Dachgelenk aufgenommen werden.

Gegenüber allen diesen Bewegungen bietet das Dachgelenk eine stabile Führung. Bei entsprechender Auslegung des Dachgelenks kann ein angrenzender Wagen, der keine Räder in der Nähe des Gelenks hat, über das Gelenk getragen werden.

Mit dem Hauptträger kann zusätzlich eine oberhalb des Durchgangs angeordnete Führung für den Mittelbügel geboten werden. Der Mittelbügel, der außerdem unterhalb des Durchgangs an der Kupplung gelagert sein kann, unterliegt dann ebenfalls einer definierten Führung. An dem Hauptträger kann zu diesem Zweck eine Mittelbügelstütze vorgesehen sein, die drehbar gegenüber dem Hauptträger gelagert ist. Die Mittelbügelstütze kann unterhalb des Hauptträgers angeordnet sein. Die Mittelbügelstütze kann in der derselben Drehachse gegenüber dem Hauptträger gelagert sein wie die Dämpferanlenkung. Der Mittelbügel kann dann Drehbewegungen ausgleichen, ohne dass ihm weitere Kräfte aufgezwungen werden.

Insbesondere bei Niederflurfahrzeugen ist unterhalb des für die Passagiere bestimmten Durchgangs meist wenig Platz. Versorgungsleitungen, mit denen technische Funktionen der angrenzenden Wagen miteinander verknüpft werden, sind deswegen häufig oberhalb des Durchgangs angeordnet. Die Versorgungsleitungen umfassen beispielsweise elektrische Kabel, Lüftungs- und Klimaschläuche sowie Hydraulikleitungen. Auch für diese Versorgungsleitungen kann mit dem erfindungsgemäßen Dachgelenk eine Führung geboten werden. Es kann dazu eine Kabelstütze vorgesehen sein, die vorzugsweise oberhalb der Dämpferanlenkung angeordnet ist. Die Kabelstütze ist drehbar gegenüber dem Hauptträger gelagert. Indem für die Kabelstütze dieselbe Drehachse gewählt wird wie für die Dämpferanlenkung, kann vermieden werden, dass die Versorgungsleitungen zu unnötigen Bewegungen gezwungen werden.

Die Dämpfer können so an dem zweiten Wagen aufgehängt sein, dass sie sich bei einer Nickbewegung synchron verlängern bzw. verkürzen, während sich bei einer Wankbewegung der eine Dämpfer verlängert und der andere Dämper sich verkürzt. Vorzugsweise sind die in Dämpfer an dem zweiten Wagen symmetrisch aufgehängt, so dass die Dämpfer jeweils Längenänderungen im gleichen Umfang unterliegen. Die Dämpfer können so ausgelegt sein, dass sie eine rückstellende Kraft entwickeln, wenn aus dem Ruhezustand heraus eine Längenänderung stattfindet. Im Ruhezustand steht das Fahrzeug gerade auf einer waagerechten Fläche. Im Ruhezustand sind die Dämpfer vorzugsweise im Wesentlichen waagerecht ausgerichtet.

Je nachdem, welchen Winkel die Dämpfer mit der Längsachse des Fahrzeugs einschließen, verschiebt sich ihre Wirkung. Wenn die Dämpfer einen kleinen Winkel mit der Längsachse einschließen, ist ihre Wirkung gegenüber Nickbewegungen stark und ihre Wirkung gegenüber Wankbewegungen gering. Dies ist umgekehrt, wenn die Dämpfer einen Winkel in der Größenordnung von 90° mit der Längsachse des Fahrzeugs einschließen. Bevorzugt ist es, wenn die Dämpfer so ausgerichtet sind, dass sie stärker gegenüber Wankbewegungen als gegenüber Nickbewegungen wirken. Dazu schließen die Dämpfer vorzugsweise einen Winkel zwischen 45° und 90°, weiter vorzugsweise zwischen 60° und 80° mit der Längsachse des Fahrzeugs ein.

Die Dämpfer können so angelenkt sein, dass sie auch bei maximalem Nickwinkel und damit bei maximaler Annäherung in dem Fahrzeuggelenk einen Winkel von weniger als 90° mit der Längsachse einschließen. Größer als 90° sollte der Winkel nicht werden, weil dann aus der rückstellenden Kraft eine die Bewegung verstärkende Kraft wird. Um dies sicher zu vermeiden, kann ein Winkel von 85° als Obergrenze gewählt werden.

In einer alternativen Ausführungsform können die Dämpfer so ausgerichtet sein, dass sie im Ruhezustand einen Winkel von ungefähr 90°, beispielsweise zwischen 85° und 95° mit der Längsachse des Fahrzeugs schließen. Unabhänging davon, ob die Fahrt durch eine Senke oder über eine Kuppe geht, führt eine Nickbewegung dann dazu, dass die Dämpfer sich verlängern. Allerdings hat die Längenänderung nur geringen Umfang, so dass auch die rückstellende Kraft gering ist. Hingegen ist die Wirkung der Dämpfer gegenüber Wankbewegungen bei dieser Anordnung maximal.

Wenn das Dachgelenk in einem Gelenksystem verwendet werden soll, bei dem einer der angrenzenden Wagen keine Räder in der Nähe des Gelenks hat, sondern über das Gelenkssystem getragen wird, muss das Dachgelenk hinreichend stabil ausgelegt sein. Die Dämpfer können dazu einen Anschlag aufweisen, der einer Kraft von mindestens 8 kN, vorzugsweise von mindestens 15 kN, weiter vorzugsweise von mindestens 25 kN standhält. Der Anschlag kann so positioniert sein, dass er bei einem Wankwinkel gegenüber dem Ruhezustand von weniger als 5° erreicht wird.

Um am zweiten Wagen geeignete Anlenkpunkte für die Dämpfer zu bieten, können Dämpferträger vorgesehen sein, die sich zu dem zweiten Wagen erstrecken und an denen die Anlenkpunkte ausgebildet sind. Die Anlenkpunkte am zweiten Wagen können in Längsrichtung betrachtet einen um 5 cm bis 30 cm, vorzugsweise um 10 cm bis 20 cm näher am zweiten Wagen liegen als die Dämpferanlenkung am Hauptträger. Das Dachgelenk kann so ausgelegt sein, dass dieser Abstand sich bei maximaler Nickbewegung auf einen Wert zwischen 3 cm und 10 cm reduziert. Der gesamte mit dem Dachgelenk überbrückte Abstand zwischen dem ersten Wagen und dem zweiten Wagen kann zwischen 1 m und 2 m liegen.

Die Erfindung betrifft außerdem ein Gelenksystem für die Verbindung von zwei Wagen eines mehrgliedrigen Fahrzeugs. Das Gelenksystem umfasst eine unterhalb eines Durchgangs angeordnete Kupplung, die die beiden Wagen miteinander verbindet und einen zentralen Drehpunkt für Relativbewegungen zwischen den Wagen bildet. Oberhalb des Durchgangs ist ein erfindungsgemäßes Dachgelenk angeordnet.

Das Gelenksystem kann so gestaltet sein, dass die Kupplung und die Dämperanlenkung des Dachgelenks eine gemeinsame Drehachse aufweisen. Es kann ferner ein Mittelbügel vorgesehen sein, der gegenüber der Kupplung drehbar gelagert und der mit der Mittelbügelstütze des Dachgelenks verbunden ist. Es können Versorgungsleitungen vorgesehen sein, die sich von dem ersten Wagen zu dem zweiten Wagen erstrecken. Die Versorgungsleitungen, die oberhalb des Durchgangs angeordnet sein können, können mit der Kabelstütze des Dachgelenks verbunden sein.

Die Erfindung wird nachfolgend unter Bezugnahme auf die beigefügten Zeichnungen anhand vorteilhafter Ausführungsformen beispielhaft beschrieben. Es zeigen:
- Fig. 1:: eine Seitenansicht einer Straßenbahn;
- Fig. 2:: eine schematische Ansicht eines erfindungsgemäßen Gelenksystems;
- Fig. 3:: eine Seitenansicht eines erfindungsgemäßen Fahrzeuggelenk; und
- Fig. 4:: die Ausführungsform aus Fig. 3 in einer Ansicht von oben.

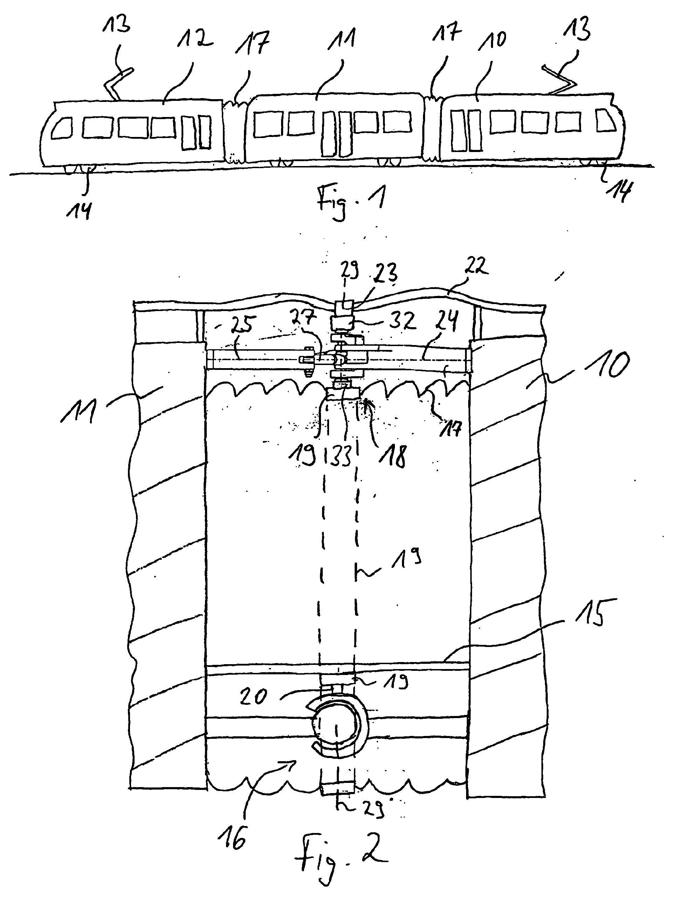

Eine Straßenbahn in Fig. 1 umfasst einen Vorderwagen 10, einen Mittelwagen 11 und einen Hinterwagen 12. Der Vorderwagen 10 und der Hinterwagen 12 sind als Triebwagen ausgebildet, die mit Stromabnehmern 13 elektrische Energie aus einer Oberleitung abgreifen und nicht dargestellten Antriebsmotoren zuführen. Die Antriebsmotoren treiben Räder 14 der Straßenbahn an.

Der Vorderwagen 10 und der Hinterwagen 12 sind jeweils über ein in Fig. 1 nicht dargestelltes Gelenk mit dem Mittelwagen 11 verbunden. Der Vorderwagen 10 und der Hinterwagen 12 haben keine Räder in der Nähe der Gelenke, sondern werden über die Gelenke von dem Mittelwagen 11 getragen.

Zwischen den Wagen bestehen Durchgänge, die die Passagiere auch während der Fahrt durchqueren können. Die Durchgänge sind mit Faltenbälgen 17 umgeben, durch die die Passagiere vor Umgebungseinflüssen geschützt werden. Ungefähr in der Mitte zwischen den beiden angrenzenden Wagen ist ein in Fig. 1 nicht gezeigter Mittelbügel 19 angeordnet, der dem Faltenbalg 17 zusätzliche Stabilität verleiht.

In Fig. 2 ist das Gelenksystem zwischen dem Vorderwagen 10 und dem Mittelwagen 11 in vergrößerter Darstellung gezeigt. Das Gelenksystem umfasst eine Übergangsplattform 15, auf der die Passagiere stehen, wenn sie den Durchgang nutzen. Der Vorderwagen 10 und der Mittelwagen 11 sind über eine unterhalb der Übergangsplattform 15 angeordnete Kupplung 16 miteinander verbunden. Die Kupplung 16, die den Vorderwagen 10 und den Mittelwagen 11 in einem festen Abstand zueinander hält, umfasst einen kugelförmigen Gelenkkopf, der in einer Gelenkschale aufgenommen ist. Der Gelenkkopf kann sich in der Gelenkschale in alle Richtungen drehen, so dass verschiedene Bewegungen zwischen dem Vorderwagen 10 und dem Mittelwagen 11 möglich sind. Insbesondere ermöglicht die Kupplung 16 die erwähnten Drehbewegungen, Nickbewegungen und Wankbewegungen sowie Kombinationen daraus. Für alle Bewegungen bildet die Kupplung 16 den zentralen Drehpunkt.

Das Gelenksystem umfasst ferner einen oberhalb des Durchgangs angeordnetes Dachgelenk 18, das die in diesem Bereich auftretenden Bewegungen zwischen dem Vorderwagen 10 und dem Mittelwagen 11 aufnimmt. Da das Dachgelenk 18 einigen Abstand zum zentralen Drehpunkt hat, sind die Bewegungen, die aufgenommen werden müssen, komplexer als die von der Kupplung 16 aufzunehmenden Bewegungen. So muss das Dachgelenk 18 eine Abstandänderung ausgleichen, wenn in dem Gelenksystem eine Nickbewegung stattfindet. So muss das Dachgelenk 18 eine Relativbewegung in Querrichtung ausgleichen, wenn in dem Gelenksystem eine Wankbewegung stattfindet. Der Aufbau des Dachgelenks 18 wird unten näher erläutert.

Der Faltenbalg 17 erstreckt sich um den Durchgang herum und umschließt diesen nach oben, nach unten sowie zu allen Seiten. Zur Stabilisierung des Faltenbalgs 17 ist ein Mittelbügel 19 vorgesehen, der in Fig. 2 in gestrichelter Linie angedeutet ist und der unterhalb des Dachgelenks 18 angeordnet ist. Oberhalb des Dachgelenks 18 erstreckt sich eine Mehrzahl von Versorgungsleitungen 22 vom Vorderwagen 10 zum Mittelwagen 11. Die Versorgungsleitungen 22 umfassen elektrische Kabel, Lüftungs- und Klimaschläuche sowie Hydraulikleitungen und dienen dazu, technische Funktionen des Vorderwagens 10 und des Mittelwagens 11 miteinander zu verknüpfen. Die Versorgungsleitungen 22 erstrecken sich entlang eines geschwungenen Wegs, so dass sie Abstandsänderungen zwischen dem Vorderwagen 10 und dem Mittelwagen 11 aufnehmen können.

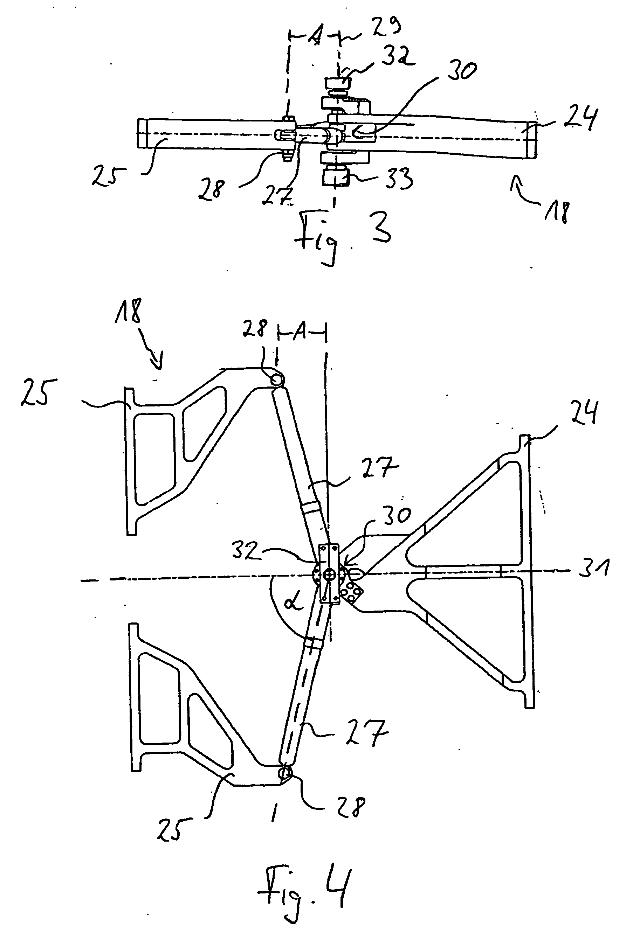

Das erfindungsgemäße Dachgelenk 18 umfasst gemäß den Figuren 3 und 4 einen Hauptträger 24, der starr mit dem Vorderwagen 10 verbunden ist, sowie zwei Dämpferträger 25, die starr mit dem Mittelwagen 11 verbunden sind. Zwei Dämpfer 27 erstrecken sich von Anlenkpunkten 28 der Dämpferträger 25 zu dem Hauptträger 24. Gegenüber dem Hauptträger 24 sind die Dämpfer 27 in einer gemeinsamen Drehachse 29 drehbar gelagert. Die Dämpferanlenkung 30 besteht gemäß Fig. 3 also darin, dass die Dämpfer 27 in der gemeinsamen Drehachse 29 übereinander an dem Hauptträger 24 angelenkt sind.

Die Drehachse 29 entspricht der zentralen Drehachse des Gelenksystems, in der die Drehung stattfindet, wenn das Fahrzeug in der Ebene um eine Kurve fährt. Diese Drehbewegungen können von dem Dachgelenk 18 also ohne eine Längenänderung in den Dämpfern 27 aufgenommen werden. Das Dachgelenk ist so ausgelegt, dass es Drehbewegungen bis zu einem maximalen Winkel von +/-38° aufnehmen kann.

Bei einer Nickbewegung in dem Gelenksystem bewegen sich der Hauptträger 24 und die Dämpferträger 25 entlang der Längsachse 31 des Fahrzeugs aufeinander zu bzw. entfernen sich voneinander. Diese Bewegung nimmt das Dachgelenk 18 durch eine Längenänderung in den Dämpfern 27 auf, wobei sich die Dämpfer synchron verkürzen bzw. verlängern. In dem in Fig. 4 gezeigten Ruhezustand sind die Dämpfer 27 so ausgerichtet, dass sie mit der Längsachse 31 einen Winkel α von ungefähr 75° einschließen. Bewegen sich der Hauptträger 24 und die Dämpferträger 25 aufeinander zu, so verkürzen sich die Dämpfer 27 und der Winkel α vergrößert sich. Das Dachgelenk 18 ist so ausgelegt, dass es Nickbewegungen bis zu einem Winkel von +/-5° aufnehmen kann. Auch bei maximaler Nickbewegung wird der Winkel α nicht größer als 85°.

Der von dem Dachgelenk 18 überbrückte Zwischenraum zwischen dem Vorderwagen 10 und dem Mittelwagen 11 hat eine Länge von ungefähr 130 cm. Im Ruhezustand beträgt der in Längsrichtung betrachtete Abstand A zwischen der Drehachse 29 und den Anlenkpunkten 28 an den Dämpferträgern 25 ungefähr 15 cm. Wenn der Hauptträger 24 und die Dämpferträger 25 sich bei einer Nickbewegung maximal annähern, reduziert sich der Abstand A auf wenige Zentimeter.

Wankbewegungen, bei denen sich der Vorderwagen 10 und der Mittelwagen 11 um eine Längsachse relativ zueinander verdrängen, werden von dem Dachgelenk 18 aufgenommen, indem sich einer der Dämpfer 27 verkürzt und der andere Dämpfer 27 sich entsprechend verlängert. Das Dachgelenk 18 ist so ausgelegt, dass Wankbewegungen bis zu einem maximalen Winkel von +/- 3° aufgenommen werden können. Der maximale Wankwinkel wird definiert durch einen Anschlag in den Dämpfern 27. Die Anschläge in den Dämpfern 27 sind so ausgelegt, dass sie Kräften von mehr als 30 kN standhalten und damit die Wankbewegungen sicher innerhalb der vorgesehenen Grenzen halten können.

Das Dachgelenk 18 umfasst ferner eine oberhalb der Dämpferanlenkung 30 angeordnete Kabelstütze 32 und eine unterhalb der Dämpferanlenkung 30 angeordnete Mittelbügelstütze 33. Die Kabelstütze 32 und die Mittelbügelstütze 33 sind beide drehbar gegenüber dem Hauptträger 24 gelagert, wobei die Drehachse jeweils mit der Drehachse 29 der Dämpferanlenkung 30 übereinstimmt. Mit der Kabelstütze 32 werden, wie Fig. 2 zeigt, die Versorgungsleitungen 22 geführt. Die Mittelbügelstütze 33 bietet dem Mittelbügel 19 Führung.

Aufgrund der gemeinsamen Drehachse 29 von Dämpferanlenkung 30, Kabelstütze 32 und Mittelbügelstütze 33 können Drehbewegungen in dem Dachgelenk 18 aufgenommen werden, ohne dass unnötig Kräfte auf die Versorgungsleitungen 22 oder den Mittelbügel 19 übertragen werden. Die Kabelstütze 32 und die Mittelbügelstütze 33 können in freier Drehung jeweils die Position einnehmen, in der die Versorgungsleitungen 22 bzw. der Faltenbalg 17 der geringsten Belastung ausgesetzt sind.

Bei Nickbewegungen und Wankbewegungen bleibt die Position der Drehachse 29 relativ zu dem Vorderwagen 10 konstant, während die Drehachse 29 sich relativ zu dem Mittelwagen 11 bewegt. Diese Bewegungen müssen also von dem Abschnitt des Faltenbalgs 17 und der Versorgungsleitungen 22 ausgeglichen werden, der zwischen der Drehachse 29 und dem Mittelwagen 11 liegt. Da Nickbewegungen und Wankbewegungen nur in begrenztem Umfang stattfinden, stellt dies für den Faltenbalg 17 und die Versorgungsleitungen 22 keine übermäßige Belastung dar.

## Patentansprüche

1. Dachgelenk zum Verbinden von einem ersten Wagen (10) und einem zweiten Wagen (11) eines mehrgliedrigen Fahrzeugs, mit einem sich zu dem ersten Wagen (10) erstreckenden Hauptträger (24) der eine Dämpferanlenkung (30) aufweist, **dadurch gekennzeichnet, dass** zwei sich zu dem zweiten Wagen (11) erstreckende Dämpfer (27) vorgesehen sind, die bei einer Nickbewegung des Fahrzeugs eine Längenänderung erfahren, und wobei die Dämpferanlenkung eine gemeinsame Drehachse (29) definiert, um die sich die Dämpfer (27) relativ zu dem Hauptträger (24) drehen können.

2. Dachgelenk nach Anspruch 1, **dadurch gekennzeichnet, dass** eine Mittelbügelstütze (33) vorgesehen ist, die drehbar gegenüber dem Hauptträger (24) gelagert ist.

3. Dachgelenk nach Anspruch 2, **dadurch gekennzeichnet, dass** die Mittelbügelstütze (33) unterhalb der Dämpferanlenkung (30) angeordnet ist.

4. Dachgelenk nach Anspruch 2 oder 3, **dadurch gekennzeichnet, dass** die Dämpferanlenkung (30) und die Mittelbügelstütze (33) in einer gemeinsamen Drehachse (29) gegenüber dem Hauptträger (24) gelagert sind.

5. Dachgelenk nach einem der Ansprüche 1 bis 4, **dadurch gekennzeichnet, dass** eine Kabelstütze (32) vorgesehen ist, die drehbar gegenüber dem Hauptträger (24) gelagert ist.

6. Dachgelenk nach Anspruch 5, **dadurch gekennzeichnet, dass** die Kabelstütze (32) oberhalb der Dämpferanlenkung (30) angeordnet ist.

7. Dachgelenk nach Anspruch 5 oder 6, **dadurch gekennzeichnet, dass** die Dämpferänlenkung (30) und die Kabelstütze (32) in einer gemeinsamen Drehachse (29) gegenüber dem Hauptträger (24) gelagert sind.

8. Dachgelenk nach einem der Ansprüche 1 bis 7, **dadurch gekennzeichnet, dass** die Dämpfer (27) im Ruhezustand des Fahrzeugs einen Winkel (α) zwischen 45° und 90°, vorzugsweise zwischen 60° und 80° mit der Längsachse (31) des Fahrzeugs einschließen.

9. Dachgelenk nach einem der Ansprüche 1 bis 8, **dadurch gekennzeichnet, dass** die Dämpfer (27) so angeordnet sind, dass der Winkel (α), den die Dämpfer (27) mit der Längsachse (31) des Fahrzeugs einschließen auch bei maximaler Nickbewegung des Fahrzeugs kleiner ist als 90°, vorzugsweise kleiner ist als 85°.

10. Dachgelenk nach einem der Ansprüche 1 bis 9, **dadurch gekennzeichnet, dass** die Dämpfer (27) einen Anschlag aufweisen, der einer Kraft von mindestens 8 kN, vorzugsweise mindestens 15 kN, weiter vorzugsweise mindestens 25 kN standhält.

11. Dachgelenk nach einem der Ansprüche 1 bis 10, **dadurch gekennzeichnet, dass** Dämpferträger (25) vorgesehen sind, die sich zu dem zweiten Wagen (11) erstrecken und an denen Anlenkpunkte (28) für die Dämpfer (27) ausgebildet sind.

12. Gelenksystem für die Verbindung zwischen einem ersten Wagen (10) und einem zweiten Wagen (11) eines mehrgliedrigen Fahrzeugs, mit einer unterhalb eines Durchgangs angeordneten Kupplung (16) und einem oberhalb des Durchgangs angeordneten Dachgelenk (18), **dadurch gekennzeichnet, dass** das Dachgelenk (18) gemäß einem der Ansprüche 1 bis 11 ausgebildet ist.

13. Gelenksystem nach Anspruch 12, **dadurch gekennzeichnet, dass** die Dämpferanlenkung (30) und die Kupplung (16) eine gemeinsame Drehachse (29) haben.

14. Gelenksystem nach Anspruch 12 oder 13, **dadurch gekennzeichnet, dass** ein Mittelbügel (29) vorgesehen ist, der mit der Mittelbügelstütze (33) verbunden ist und der gegenüber der Kupplung (16) drehbar gelagert ist.

15. Gelenksystem nach einem der Ansprüche 12 bis 14, **dadurch gekennzeichnet, dass** Versorgungsleitungen (22) vorgesehen sind, die sich zwischen dem ersten Wagen (10) und dem zweiten Wagen (11) erstrecken, und dass die Versorgungsleitungen (22) mit der Kabelstütze (33) verbunden sind.

## Claims

1. A roof joint for connecting a first carriage (10) and a second carriage (11) of a multiple-unit vehicle, having a main carrier (24) which extends to the first carriage (10) and has a damper linkage (30), **characterised in that** two dampers (27) are provided, which extend to the second carriage (11) and undergo a change in length upon a pitching movement of the vehicle, and wherein the damper linkage defines a common axis of rotation (29) about which the dampers (27) can rotate relative to the main carrier (24).

2. A roof joint according to Claim 1, **characterised in that** a central bracket support (33) is provided, which is rotatably mounted with respect to the main carrier (24).

3. A roof joint according to Claim 2, **characterised in that** the central bracket support (33) is arranged below the damper linkage (30).

4. A roof joint according to Claim 2 or 3, **characterised in that** the damper linkage (30) and the central bracket support (33) are mounted in a common axis of rotation (29) with respect to the main carrier (24).

5. A roof joint according to one of Claims 1 to 4, **characterised in that** a cable support (32) is provided, which is rotatably mounted with respect to the main carrier (24).

6. A roof joint according to Claim 5, **characterised in that** the cable support (32) is arranged above the damper linkage (30).

7. A roof joint according to Claim 5 or 6, **characterised in that** the damper linkage (30) and the cable support (32) are mounted in a common axis of rotation (29) with respect to the main carrier (24).

8. A roof joint according to one of Claims 1 to 7, **characterised in that** the dampers (27) form an angle (α) of between 45° and 90°, preferably between 60° and 80° with the longitudinal axis (31) of the vehicle when the vehicle is idle.

9. A roof joint according to one of Claims 1 to 8, **characterised in that** the dampers (27) are arranged so that the angle (α) which the dampers (27) form with the longitudinal axis (31) of the vehicle is also less than 90°, preferably less than 85°, upon a maximum pitching movement of the vehicle.

10. A roof joint according to one of Claims 1 to 9, **characterised in that** the dampers (27) have a stop which withstands a force of at least 8 kN, preferably at least 15 kN, more preferably at least 25 kN.

11. A roof joint according to one of Claims 1 to 10, **characterised in that** damper carriers (25) are provided, which extend to the second carriage (11) and on which linkage points (28) for the dampers (27) are constructed.

12. A joint system for the connection between a first carriage (10) and a second carriage (11) of a multi-unit vehicle, having a coupling (16) arranged below a connecting passage and a roof joint (18) arranged above the connecting passage, **characterised in that** the roof joint (18) is constructed according to one of Claims 1 to 11.

13. A joint system according to Claim 12, **characterised in that** the damper linkage (30) and the coupling (16) have a common axis of rotation (29).

14. A joint system according to Claim 12 or 13, **characterised in that** a central bracket (29) is provided, which is connected to the central bracket support (33) and is rotatably mounted with respect to the coupling (16).

15. A joint system according to one of Claims 12 to 14, **characterised in that** supply lines (22) are provided, which extend between the first carriage (10) and the second carriage (11), and **in that** the supply lines (22) are connected to the cable support (33).

## Revendications

1. Articulation de toit pour relier un premier wagon (10) et un second wagon (11) d'un véhicule à plusieurs articulations, comprenant une poutre principale (24) s'étendant en direction du premier wagon (10), laquelle présente une articulation d'amortisseur (30), **caractérisée en ce que** deux amortisseurs (27) s'étendant vers le second wagon (11) sont prévus, lesquels subissent une variation de longueur lors d'un mouvement de tangage du véhicule, et l'articulation d'amortisseur définissant un axe de rotation (29) commun, autour duquel les amortisseurs (27) peuvent se tourner par rapport à la poutre principale (24).

2. Articulation de toit selon la revendication 1, **caractérisée en ce qu'**il est prévu un support d'étrier central (33), qui est monté de façon rotative par rapport à la poutre principale (24).

3. Articulation de toit selon la revendication 2, **caractérisée en ce que** le support d'étrier central (33) est disposé au-dessous de l'articulation d'amortisseur (30).

4. Articulation de toit selon la revendication 2 ou 3, **caractérisée en ce que** l'articulation d'amortisseur (30) et le support d'étrier central (33) sont montés dans un axe de rotation (29) commun par rapport à la poutre principale (24).

5. Articulation de toit selon l'une quelconque des revendications 1 à 4, **caractérisée en ce qu'**un support de câble (32) est prévu, lequel est monté de façon rotative par rapport à la poutre principale (24).

6. Articulation de toit selon la revendication 5, **caractérisée en ce que** le support de câble (32) est disposé au-dessus de l'articulation d'amortisseur (30).

7. Articulation de toit selon la revendication 5 ou 6, **caractérisée en ce que** l'articulation d'amortisseur (30) et le support de câble (32) sont montés dans un axe de rotation (29) commun par rapport à la poutre principale (24).

8. Articulation de toit selon l'une des revendications 1 à 7, **caractérisée en ce que** les amortisseurs (27) forment, dans l'état de repos du véhicule, un angle (α) compris entre 45° et 90°, de préférence entre 60° et 80° avec l'axe longitudinal (31) du véhicule.

9. Articulation de toit selon l'une des revendications 1 à 8, **caractérisée en ce que** les amortisseurs (27) sont disposés de telle sorte que l'angle (α), que les amortisseurs (27) forment avec l'axe longitudinal (31) du véhicule, est inférieur à 90°, de préférence inférieur à 85° même avec le mouvement de tangage maximal du véhicule.

10. Articulation de toit selon l'une des revendications 1 à 9, **caractérisée en ce que** les amortisseurs (27) présentent une butée qui résiste à une force d'au moins 8 kN, de préférence d'au moins 15 kN, et avec une préférence plus forte d'au moins 25 kN.

11. Articulation de toit selon l'une des revendications 1 à 10, **caractérisée en ce que** des supports d'amortisseur (25) sont prévus, lesquels s'étendent vers le second wagon (11) et sur lesquels sont formés des points d'articulation (28) pour les amortisseurs (27).

12. Système d'articulation pour la liaison entre un premier wagon (10) et un second wagon (11) d'un véhicule à plusieurs éléments, comprenant un accouplement (16) disposé au-dessous d'un passage et une articulation de toit (18) disposée au-dessus du passage, **caractérisé en ce que** l'articulation de toit (18) est conçue selon l'une des revendications 1 à 11.

13. Système d'articulation selon la revendication 12, **caractérisé en ce que** l'articulation d'amortisseur (30) et l'accouplement (16) ont un axe de rotation commun (29).

14. Système d'articulation selon la revendication 12 ou 13, **caractérisé en ce qu'**un étrier central (29) est prévu, lequel est relié au support d'étrier central (33) et qui est monté de façon rotative par rapport à l'accouplement (16).

15. Système d'articulation selon l'une des revendications 12 à 14, **caractérisé en ce que** des conduites d'alimentation (22) sont prévues, lesquelles s'étendant entre le premier wagon (10) et le second wagon (11), et **en ce que** les conduites d'alimentation (22) sont reliées au support de câble (33).
